# EUROPÄISCHE PATENTSCHRIFT

(11) **EP 1 012 197 B1**
(45) Veröffentlichungstag und Bekanntmachung des Hinweises auf die Patenterteilung: **17.07.2002**
(21) Anmeldenummer: 98952588.6
(22) Anmeldetag: 03.09.1998
(51) Int. Cl.: C08G 8/24, C08G 18/54, B22C 1/22

(54) **PHENOLHARZ UND BINDEMITTEL FÜR DIE HERSTELLUNG VON FORMEN UND KERNEN NACH DEM PHENOLHARZ-POLYURETHAN-VERFAHREN**
PHENOLIC RESIN AND BINDING AGENT FOR PRODUCING MOULDS AND CORES ACCORDING TO THE PHENOLIC RESIN-POLYURETHANE METHOD
RESINE PHENOLIQUE ET LIANT POUR LA PRODUCTION DE MOULES ET DE NOYAUX SELON LE PROCEDE POLYURETHANNE-RESINE PHENOLIQUE

(30) Priorität: 04.09.1997 DE 19738755
(43) Veröffentlichungstag der Anmeldung: 28.06.2000
(73) Patentinhaber: Ashland-Südchemie-Kernfest GmbH, 40271 Hilden (DE)
(72) Erfinder: WERNER, Andreas, D-40229 Düsseldorf (DE); KOCH, Diether, D-40822 Mettmann (DE)
(74) Vertreter: VOSSIUS & PARTNER
(86) Internationale Anmeldenummer: EP9805581
(87) Internationale Veröffentlichungsnummer: WO9911686

(56) Entgegenhaltungen:
- WO-A-91/17866
- US-A- 3 409 579
- US-A- 4 337 334
- PATENT ABSTRACTS OF JAPAN vol. 006, no. 150 (M-148), 10. August 1982 & JP 57 068240 A (ASAHI ORGANIC CHEM IND CO LTD), 26. April 1982
- PATENT ABSTRACTS OF JAPAN vol. 009, no. 235 (M-415), 21. September 1985 & JP 60 092037 A (SUMITOMO DUREZ KK), 23. Mai 1985

## Beschreibung

Die vorliegende Erfindung betrifft ein Phenolharz und ein dieses enthaltendes Bindemittel, das sich besonders für die Herstellung von Gießereiformen und -kernen eignet. Beschrieben wird ein Phenolharz, das durch Kondensation von Phenolen mit Aldehyden erhalten wird, wobei als Rohstoff neben Phenolen ein Stoffgemisch verwendet wird, welches als Rückstand bei der Herstellung von Bisphenol anfällt, sogenannter Bisphenol-A-Teer. Bindemittel, in deren Phenolharzkomponente ein Teil des Phenols durch Bisphenol-A-Teer ersetzt ist, weisen überraschenderweise eine bessere thermische Beständigkeit auf, als Phenol-Formaldehydharze ohne dieses Material.

Zur Herstellung von Gießereikernen und -formen steht den Gießereien heute eine ganze Reihe von unterschiedlichen Verfahren zur Auswahl. Bei der Kern-Serienherstellung werden überwiegend Kunstharze als Bindemittel eingesetzt. Unter den bekannten Verfahren nehmen die gashärtenden Verfahren - insbesondere das Ashland-Cold-Box-Verfahren - eine überragende Stellung ein.

Bei dem Ashland-Cold-Box-System handelt es sich um ein Zweikomponenten-System, bei dem eine Komponente aus Polyolen mit mindestens zwei Hydroxygruppen im Molekül und die andere Komponente aus Polyisocyanaten mit mindesens zwei IsocyanatGruppen im Molekül besteht. Diese beiden Komponenten werden in gelöster Form einem körnigen Formstoff (= Aggregat; meistens Sand) zugemischt und durch Zugabe eines Katalysators zur Aushärtung gebracht.

US-A-3,409,579 beschreibt Bindemittel, die als Zweikomponenten-Systeme in einer Komponente eine Harzlösung enthalten und als andere Komponente einen Härter.

Die Harzkomponente des Bindemittels gemäß US-A-3,409,579 besteht aus einem Phenolharz vom Benzylethertyp und einer Kombination von organischen Lösemitteln. Das Phenolharz wird vorzugsweise erhalten durch die durch zweiwertige, im Reaktionsmedium gelöste Metallionen katalysierte Reaktion von Phenolen und Formaldehyden wie beschrieben im genannten US-Patent und in EP-A-0 183 782. Phenolharze vom Benzylethertyp (auch als Resole bezeichnet) unterscheiden sich von den unter sauren Bedingungen kondensierten Novolaken durch bessere Löslichkeit und geringere Viskosität, zwei Eigenschaften, die für die Eignung in Bindemittelsystemen für das Phenolharz-Polyurethan-Verfahren von erheblicher Bedeutung sind. Weiterhin zeichnen sich Phenolharze vom Benzylethertyp in diesem Verfahren durch höhere Reaktivität aus.

Die Härterkomponente enthält ein flüssiges Polyisocyanat mit wenigstens 2 Isocyanatgruppen im Molekül. Diese beiden Komponenten werden mit einem Feuerfeststoff (meistens Quarzsand) innig vermischt und das auf diese Weise erhaltene Gemisch in die gewünschte Form gebracht.

In US-A-3,409,579 werden die in Form gebrachten Sandgemische durch das Hindurchleiten gasförmiger Amine ausgehärtet. In US-A-3,676,392 wird die Aushärtung durch eine Base mit einem pKB-Wert im Bereich von 7 - 11 (beschrieben von D.D. Perrin in Dissociation Constants of Organic Bases in Aqueous Solution, Butterworth, London, 1965) erreicht. Sowohl in US-A-3,409,579 als auch in US-A-3,676,392 sind die bevorzugten Phenolharze Kondensationsprodukte von Phenolen der allgemeinen Formel 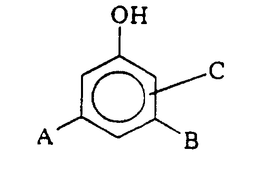 in der A, B und C Wasserstoff, Alkylgruppen, Alkoxygruppen oder Halogenatome sind, mit Aldehyden der allgemeinen Formel R'CHO, in der R' ein Wasserstoff oder eine Alkylgruppe mit 1 - 8 Kohlenstoffatomen ist. Die Kondensationsreaktion von Phenol(en) und Aldehyd(en) erfolgt in der flüssigen Phase, üblicherweise bei Temperaturen unter 130°C in Gegenwart katalytischer Konzentrationen im Reaktionsmedium gelöster Metallionen. Die Herstellung und Charakterisierung der auf diese Weise erhaltene Phenolharze wird detailliert beschrieben in US-A-3,485,797. Die Verwendung substituierter Phenole wird z.B. in EP-A-183 782 beschrieben. Besonders bevorzugte Phenole sind hiernach ortho-Kresol und para-Nonylphenol.

In US-A-3,904,559 werden Gießereibindemittel offenbart, in denen die Polyolkomponente ein Gemisch von Bisphenol und einem Polyetherpolyol enthält. EP-A-2 898 beschreibt eine Polyolkomponente für ein bei Raumtemperatur härtendes Bindersystem, das aus einem Gemisch von Bisphenol und einer Phenol-Terpen-Komponente besteht. In EP-A-40 497 werden Phenol-Ketonharze offengelegt, die durch Reaktion von Phenolen oder Thiophenolen mit Ketonen und Aldehyden erhalten wurden.

Die Verwendung von Bisphenol-A-Teer als Rohmaterial für Bindemittel nach dem Hot-Box-Verfahren ist im US-A-3,318,840 und US-A-5,607,986 beschrieben. Diese Bindemittel umfassen ein Furanharz, Furfurylalkohol und Polyvinylacetat. Der Bisphenol-A-Teer wurde eingesetzt, um höhere Zugfestigkeiten der Formstoffgemische zu erzielen. Allerdings weisen die heißhärtenden Hot-Box-Bindemittel gegenüber den kalthärtenden Bindemittel des Phenolharz-Polyurethan-Verfahrens eine Reihe gravierender Nachteile auf. Insbesondere sind die Fertigungszyklen länger und damit die Produktivität geringer.

US-A-4,337,334 beschreibt die Herstellung von Phenolharzen mit Bisphenol-A Destillationsrückständen und Formaldehyd unter saurer Katalyse. Ein auf diese Weise erhaltenes Harz wird als Novolakharz bezeichnet. Mit diesem beschriebenen Material wird Sand bei erhöhten Temperaturen beschichtet. Dieser beschichtete Sand wird zusammen mit Hexamethylentetramin in ein Formwerkzeug gegeben und bei Temperaturen von ca. 250°C ausgehärtet. Dieses Verfahren wird als Croning- oder Shell-mould Verfahren bezeichnet. Die erhaltenen Formkörper sollen höhere Biegefestigkeit (Kaltfestigkeit) und Rißwiderstand aufweisen.

Die Phenolharzkomponente des Bindemittels im Phenolharz-Polyurethan-Verfahren wird - wie bereits erwähnt - üblicherweise als Lösung in einem oder mehreren organischen Lösungsmitteln eingesetzt.

Die zweite Komponente der bekannten Bindemittel beinhaltet ein aliphatisches, cycloaliphatisches oder aromatisches Polyisocyanat, vorzugsweise mit 2 - 5 Isocyanatgruppen pro Molekül. Auch Gemische von Polyisocyanaten können eingesetzt werden. Die Polyisocyanate oder ihre Lösungen in organischen Lösungsmitteln werden in ausreichenden Konzentrationen eingesetzt, um die Aushärtung des Phenolharzes zu berwerkstelligen.

Ein bestehendes Problem der Bindemittel auf Benzyletherpolyol-Polyurethanbasis ist ihre oft ungenügende thermische Beständigkeit. Zwar ist ein gewisser thermischer Abbau des Bindemittels wünschenswert, damit das Formstoffgemisch nach dem Gießen des Metalles leichter aus dem Gußstück entfernt werden kann. Zu frühe thermische Zersetzung des Bindemittels führt aber dazu, daß durch Aufplatzen des Formstoffes Risse entstehen, in die flüssiges Metall eindringen kann, sogenannte Branntrisse oder Blattrippen. Auch kann heißes Metall den Formstoff als sogenannte Erosion wegspülen. Schließlich kann eine Schicht des Formstoffes vom restlichen Formstoff abplatzen. Man spricht in einem solchen Fall von Schülpenbildung. Alle diese Fehler können durch Bindemittel mit höherer thermischer Beständigkeit reduziert oder gar vermieden werden.

In US-A-4,546,124 wird vorgeschlagen, die thermische Beständigkeit der Phenolharze durch Alkoxylierung zu erhöhen. Auch wenn hierdurch eine gewisse Verbesserung erreicht wird, ist das Problem noch nicht gelöst.

Es war daher Aufgabe der vorliegenden Erfindung, Bindemittel für Gießereiformen und -kerne zur Verfügung zu stellen, bei denen das Problem des zu frühen thermischen Abbaus überwunden bzw. minimiert ist.

Diese Aufgabe wurde durch den überraschenden Befund gelöst, daß Bindemittel auf der Basis eines Phenolharzes, in dem außer einem oder mehreren Phenolen und einem oder mehreren Aldehyden ein Gemisch von Bisphenolen und höheren Kondensations- und Substitutionsprodukten des Bisphenols enthalten ist, keinem nennenswerten thermischen Abbau unterliegen.

Gegenstand der Erfindung ist somit ein Phenolharz, erhältlich durch Umsetzung eines oder mehrerer unsubstituierter oder substituierter Phenole mit einem oder mehreren Aldehyden, dadurch gekennzeichnet, daß zur Umsetzung zusätzlich Bisphenol-A-Teer verwendet wird.
Gegenstand der Erfindung ist auch die Verwendung dieses Phenolharzes als Phenolharzkomponente eines Bindemittels für das Phenolharz-Polyurethanverfahren zur Herstellung von Gießereiformen und -kernen.
Gegenstand der Erfindung ist ferner ein Bindemittel für das Phenolharz-Polyurethanverfahren zur Herstellung von Gießereiformen und -kernen, umfassend ein Phenolharz gemäß vorstehender Definition als Phenolharzkomponente und ein Polyisocyanat.

Schließlich ist Gegenstand der Erfindung ein Verfahren zur Herstellung von Gießereiformen und -kernen, umfassend die Schritte:
- Mischen eines Bindemittels gemäß vorstehender Definition mit einem Formstoff,
- Verarbeiten des Gemisches zu einer Gießereiform oder einem Gießereikern und
- Härten des Bindemittels durch Gashärtung oder Kalthärtung.

Die Phenolharze der Erfindung sind Resole (Benzyletherharze), die durch Umsetzung der Komponenten in Gegenwart eines zweiwertigen Metallkatalysators, bevorzugt Zinkacetat, erhalten werden - im Gegensatz zu den durch saure Katalyse hergestellten Novolaken - und die sich für das Cold-Box-Verfahren als Phenolharzkomponente eignen.

Cold-Box-Binder auf Basis von Resol-Phenolharzen/Polyurethanen durchlaufen eine thermoplastische Phase beim Erhitzen, in der die Urethanbindungen thermisch dissoziieren (A. Knop, W. Scheib, Chemistry and Application of Phenolic Resins, Springer-Verlag Berlin, 1979, S. 57). Überraschenderweise wurde gefunden, daß mit Bisphenol-A-Teer in diesem System eine höhere Festigkeit in der thermoplastischen Phase und danach erzielt werden kann.

Im Unterschied zu den Resolen handelt es sich bei den Novolaken (Croning-Harzen) nach der Aushärtung mit Hexamethylentetramin um Duroplaste, die keine thermische Deformation aufweisen und entsprechend spröde sind. Um die Sprödigkeit herabzusetzen, werden in vielen Fällen thermoplastische Additive zugesetzt (A. Knop, W. Scheib, a.a.O., S. 204). Bisphenol-A-Teer wird hier offenkundig mit dem Ziel eingesetzt, eine höhere Flexibilität (geringere Sprödigkeit und damit Anfälligkeit gegen Rißbildung) zu erzielen. Dieser völlig andere Effekt oder Wirkmechanismus bei Croning-Harz-Systemen stellt keinen Hinweis auf die günstigen Wirkungen des Bisphenol-A-Teers bei Resolen dar.

Das Gemisch aus Bisphenolen und höheren Kondensations- und Substitutionsprodukten des Bisphenols, das bei der Herstellung der Phenolharzkomponente des Bindemittels der Erfindung verwendet wird, fällt als Rückstand bei der Destillation von Bisphenol-A an und wird im Folgenden als Bisphenol-A-Teer bezeichnet. Bisphenol-A-Teer ist bei Raumtemperatur ein Feststoff und hat einen Erweichungspunkt von 70 - 80°C.

Die Bisphenol-A-Teer-Komponente enthält üblicherweise zwischen 10 und 50 Gew.-% 4,4'-Isopropylidendiphenol (4,4' oder p,p'-Bisphenol), zwischen 3 und 20 % o-[1-(4-Hydroxyphenyl)-1-methylethyl]-phenol (2,4' oder o,p'-Bisphenol) und zwischen 0,1 und 0,5 Gew.-% 2,2'-Isopropylidendiphenol (2,2' oder o,o'-Bisphenol). Daneben sind zwischen 1 und 10 Gew.-% Phenol enthalten, sowie größere Mengen höherkondensierter Produkte, nämlich Dimere, Trimere und Polymere des Bisphenols sowie substituierte Verbindungen. Üblicherweise wird Bisphenol-A-Teer mit bis zu 40 Gew.-% Phenol und mit bis zu 20 Gew.-% Wasser versetzt, damit das Produkt auch bei Temperaturen unter 100°C pumpbar ist.

Überraschenderweise weisen Bindemittel, die Bisphenol-A-Teer als Bestandteil des Phenolharzes enthalten, eine deutlich bessere thermische Beständigkeit auf als herkömmliche, nur auf Phenolen basierende Binder. Dieser Befund war nicht zu erwarten, zumal der Austausch von Bisphenol-A-Teer gegen reines Bisphenol-A (siehe Beispiel 2) zu keinem brauchbaren Phenolharz führte, da das Phenolharz mit reinem Bisphenol-A sich in einer üblichen Lösungsmittelkombination von den Lösungsmitteln separierte.

Die Phenolkomponente kann neben Phenol auch ein oder mehrere substituierte Phenole enthalten. Dabei ist eine Vielzahl von Substituenten möglich, wobei nur gegeben sein muß, daß der oder die Substituenten die Polymerisation des Aldehydes mit dem Phenol an den ortho- und para-Positionen nicht behindern.

Der Bisphenol-A-Teer wird zur Erzeugung des Phenolharzes der Erfindung in einer Menge von 1 bis 85 Gew.-%, bevorzugt von 8 bis 80 Gew.-% und besonders bevorzugt von 20 bis 75 Gew.-%, bezogen auf die Gesamtmenge von verwendetem Phenol, Aldehyd und Bisphenol-A-Teer, eingesetzt. Statt des technischen Bisphenol-A-Teers kann auch ein in anderer Weise hergestelltes Stoffgemisch mit im wesentlichen der vorstehend angegebenen Zusammensetzung des Bisphenol-A-Teers verwendet werden.

Die Phenolkomponente und die Bisphenol-A-Teer-Komponente werden mit Aldehyden zu phenolischen Harzen vom Benzylethertyp umgesetzt (siehe US-A-3,409,579 und EP-A-0 183 782). Diese Umsetzung wird durch zweiwertige Metallionen katalysiert. Bevorzugt werden z.B. Bleinaphthenat oder Zinkacetat als im Reaktionsmedium lösliche Katalysatoren eingesetzt. Die hierfür eingesetzten Aldehyde können jeden für die Herstellung von phenolischen Harzen geeigneten Aldehyd beinhalten, wie Formaldehyd, Acetaldehyd, Propionaldehyd, Furfuraldehyd und Benzaldehyd. Der bevorzugte Aldehyd ist Formaldehyd in seiner wäßrigen Form oder in Form von Paraformaldehyd.

Zusätzlich zu den Ausgangsmaterialien Phenol, Aldehyd und Bisphenol-A-Teer können auch Hydroxyverbindungen, wie Alkohole mit eingesetzt werden. Der Vorteil im Einsatz dieser Verbindungen liegt in einer geringeren Polarität und damit besseren Löslichkeit der dabei erhaltenen alkoxylierten Phenolharze in den eingesetzten Lösungsmitteln.

Die Hydroxyverbindungen werden in einem molaren Verhältnis Hydroxyverbindung zu Phenol von 0,04 bis 1,75 zu 1, bevorzugt von 0,1 bis 1,5 zu 1, und besonders bevorzugt von 0,4 bis 1,5 zu 1 eingesetzt.

Phenolische Harze, die in dem Bindemittel der Erfindung eingesetzt werden, müssen flüssig oder in organischen Lösungsmitteln löslich sein. Löslichkeit in organischen Lösungsmitteln ist wünschenswert, um eine homogene Verteilung des Binders auf dem Aggregat zu ermöglichen. Die weitgehende Abwesenheit von Wasser ist wünschenswert, da die Reaktion der Isocyanat-Komponente mit Wasser eine unerwünschte Nebenreaktion ist. Nicht wäßrig oder wasserfrei soll hier einen Wassergehalt der Phenolharzkomponente von kleiner 5 Gew.-%, bevorzugt kleiner 2 Gew.-% bedeuten.

Als "Phenolharz" oder "phenolisches Harz" wird hier das Reaktionsprodukt von Phenolen und Bisphenolen sowie höheren Kondensationsprodukten mit Aldehyden bezeichnet, in dem das Endprodukt der Reaktion ein Gemisch organischer Verbindungen ist. Die Zusammensetzung des Endproduktes ist abhängig von den spezifischen ausgewählten Ausgangsstoffen, dem Verhältnis dieser Ausgangsstoffe und den Reaktionsbedingungen. So spielen z.B. die Art des Katalysators, die Zeit und die Reaktionstemperatur ebenso eine Rolle wie die Anwesenheit von Lösungsmitteln und anderen Stoffen. Das Reaktionsprodukt, d.h. das Phenolharz, ist ein Gemisch verschiedener Moleküle und kann in sehr unterschiedlichen Verhältnissen Additionsprodukte, Kondensationsprodukte und nicht umgesetzte Ausgangsverbindungen, wie Phenole, Bisphenole und/oder Aldehyd enthalten.

Die Phenolharzkomponente des Bindemittels wird als Lösung in einem organischen Lösungsmittel oder einer Kombination von organischen Lösungsmitteln eingesetzt. Lösungsmittel sind erforderlich, um die Komponenten des Bindemittels in einem ausreichend niedrig-viskosen Zustand zu halten. Dieser ist u.a. erforderlich, um eine gleichmäßige Benetzung des Aggregates und dessen Rieselfähigkeit zu erhalten. Diese Lösungsmittel können unpolare aprotische Lösungsmittel, wie hochsiedende aromatische Kohlenwasserstoffe (meistens in Form von Gemischen) mit einem Siedepunkt von >150°C, hochsiedende aliphatische Kohlenwasserstoffe und Ester langkettiger Fettsäuren beinhalten. Als polare Verbindungen werden u.a. ausreichend hochsiedende Ester verwendet, wie die in DE-A-27 59 262 beschriebenen "symmetrischen" Ester, bei denen sowohl der Säurerest als auch der Alkoholrest eine im gleichen Bereich liegende Anzahl von C-Atomen (etwa 6 - 13 C-Atome) aufweist. Ebenfalls bewährt hat sich ein Gemisch aus Dimethylestern der C₄-C₆-Dicarbonsäuren, welches als "Dibasic Ester" oder kurz "DBE" bezeichnet wird. Auch cyclische Ketone werden als polare Lösungsmittel eingesetzt.

Die zweite Komponente des Bindemittels beinhaltet ein aliphatisches, cycloaliphatisches oder aromatisches Polyisocyanat, vorzugsweise mit 2 - 5 Isocyanatgruppen pro Molekül. Auch Gemische von Polyisicyanaten können eingesetzt werden. Obwohl alle Polyisocyanate mit dem phenolischen Harz unter Bildung einer vernetzten Polymerstruktur reagieren können, werden bevorzugt aromatische Polyisocyanate eingesetzt und hier besonders bevorzugt Polymethylen-Polyphenylen-Polyisocyanate.

Die Polyisocyanate oder ihre Lösungen in organischen Lösungsmitteln werden in ausreichenden Konzentrationen eingesetzt, um die Aushärtung des Phenolharzes zu bewirken, üblicherweise in einem Bereich von 10 bis 500 Gew.-%, bezogen auf das Gewicht des Phenolharzes. Bevorzugt werden 20 bis 300 Gew.-%, bezogen auf die gleiche Basis eingesetzt. Als Lösungsmittel für Polyisocyanate werden bevorzugt hochsiedende aromatische und aliphatische Kohlenwasserstoffe sowie hochsiedende Fettsäureester bzw. Gemische der genannten Stoffe eingesetzt.

Als nützliche Additive werden Silanverbindungen verwendet, wie sie z.B. in EP-A-183 782 beschrieben sind. Weitere nützliche Additive beinhalten die dort ebenfalls beschriebenen Netzmittel und Säurederivate zur Verbesserung der Sandlebenszeit.

Die Aushärtung von Phenolharz-Polyisocyanat-Bindemitteln kann nach zwei Verfahren, nämlich Gashärtung und Kalthärtung, erfolgen.

Bei der Gashärtung werden die Phenolharzkomponente und die Isocyanatkomponente mit dem Aggregat vermischt und durch Begasen mit einem gasförmigen Amin ausgehärtet.

Bei der Kalthärtung wird üblicherweise der Phenolharzkomponente eine katalytische Menge eines schwerflüchtigen tertiären Amins zugesetzt und das auf diese Weise hergestellte Vorgemisch mit der Isocyanatkomponente und dem Aggregat vermischt. Die Aushärtung erfolgt dann innerhalb von Minuten.

Die nachfolgenden Beispiele sollen die Erfindung erläutern, ohne sie einzuschränken. Die in den Beispielen verwendete Mengenangabe "GT" bedeutet Gewichtsteile, Handelsnamen sind durch "(H)" gekennzeichnet

### Beispiele

### 1. Herstellung von Phenolharzen

In einem Reaktionsgefäß, das mit Kühler, Thermometer und Rührer ausgestattet war, wurden Phenol, Formaldehyd, Bisphenol-A-Teer und Zinkacetat in den in Tabelle I angegebenen Mengen (in GT) vorgelegt. Der Kühler wurde auf Rückfluß gesetzt. Die Temperatur wurde kontinuierlich ansteigend auf 105 - 115°C gebracht und bei dieser Temperatur gehalten, bis ein Brechungsindex von 1,559 erreicht war. Der Kühler wurde auf atmosphärische Destillation umgestellt und die Temperatur kontinuierlich innerhalb einer Stunde auf 124 - 126°C gebracht. Es wurde bis zum Erreichen eines Brechungsindexes von 1,594 destilliert. Danach wurde unter Vakuum bis zum Erreichen eines Brechungsindexes von 1,600 destilliert. Die Ausbeute betrug 81 - 85 % der eingesetzten Rohstoffe.

**Tabelle I**

| Beispiel | 1 | 2 | 3 | 4 | 5 | 6 |
|---|---|---|---|---|---|---|
| | Vergleich (nicht erfindungsgemäß) | | erfindungsgemäß | | | |
| Phenol | 458,1 | 360,1 | 415,4 | 360,8 | 191,4 | 110,9 |
| Bisphenol-A-Teer | | | 53,8 | 118,1 | 306,5 | 449,7 |
| Bisphenol-A | | 118,1 | | | | |
| Paraformaldehyd | 197,7 | 176,8 | 186,4 | 176,8 | 157,9 | 95,1 |
| Zn(OAc)₂ | 0,2 | 0,3 | 0,3 | 0,3 | 0,3 | 0,3 |

### 2. Herstellung von Phenolharzlösungen

Aus den vorstehend erhaltenen Phenolharzen wurden Lösungen mit den folgenden Zusammensetzungen hergestellt.

**Tabelle II**

| Beispiel | 1 | 2 | 3 | 4 | 5 | 6 |
|---|---|---|---|---|---|---|
| | Vergleich | | erfindungsgemäß | | | |
| Phenolharz | 57,0 | 57,0 | 57,0 | 57,0 | 57,0 | 57,0 |
| DBE (H) | 10,0 | 10,0 | 10,0 | 10,0 | 10,0 | 10,0 |
| Solvesso 150 (H) | 29,7 | 29,7 | 29,7 | 29,7 | 29,7 | 29,7 |
| Amino oder Amidosilan | 0,3 | 0,3 | 0,3 | 0,3 | 0,3 | 0,3 |
| DBE = Dicarbonsäuremethylester Solvesso 150 = C₁₀-C₁₃-Aromatengemisch | | | | | | |

Bei der Phenolharzlösung 2 (Vergleich mit Bisphenol-A) trat beim Abkühlen der Lösung auf Raumtemperatur eine Phasentrennung auf. Diese Lösung wurde nicht weiter verwendet.

### 3. Herstellung und Prüfung von Formstoff-Bindemittel-Gemischen

Für die Herstellung von Formstoff-Bindemittel-Gemischen wurden die vorstehend erläuterten Phenolharzlösungen zusammen mit einer Isocyanatlösung folgender Zusammensetzung verwendet:

| | |
|---|---|
| 70 | GT Diphenylmethandiisocyanat (MDI technisch) |
| 29,8 | GT Solvesso 150 (H) |
| 0,2 | GT Säurechlorid (Phosphoroxychlorid). |

Quarzsand, Phenolharzlösung und Isocyanatlösung wurden in einem Flügelmischer innig vermischt. Mit diesen Gemischen wurden Prüfkörper nach DIN 52401 und Prüfriegel für den BCIRA-Test hergestellt, die anschließend 10 sec bei 4 bar Begasungsdruck mit Dimethylisopropylamin begast und dann 10 sec mit Luft gespült wurden. Die Gemische hatten die folgende Zusammensetzung:

| | |
|---|---|
| 100 | GT Quarzsand H 32 |
| 0,8 | GT Phenolharzlösung (1, 3, 4, 5, 6) |
| 0,8 | GT Isocyanatlösung |

Die Biegefestigkeiten der so erhaltenen Probekörper wurden nach der GF-Methode ermittelt. Dabei wurde die Festigkeit von frisch hergestellten Gemischen sofort nach der Herstellung (Anfangsfestigkeit) sowie 1, 2 und 24 Stunden (Endfestigkeit) nach der Kernherstellung geprüft. Außerdem wurde die Festigkeit von Kernen geprüft, die 24 h bei 98 % Luftfeuchtigkeit gelagert wurden.

**Tabelle III**

| Beispiel | 1 | 3 | 4 | 5 | 6 |
|---|---|---|---|---|---|
| Festigkeiten | Vergleich | erfindungsgemäß | | | |
| sofort | 155 | 135 | 145 | 115 | 145 |
| 1 h | 265 | 240 | 240 | 255 | 305 |
| 2 h | 275 | 265 | 255 | 260 | 370 |
| 24 h | 370 | 345 | 350 | 385 | 425 |
| 24 h 98 % LF | 315 | 290 | 290 | 330 | 335 |

Aus Tabelle III ist zu erkennen, daß die erfindungsgemäß hergestellten Kerne in allen Fällen vergleichbare Festigkeiten wie die mit dem herkömmlichen Bindemittel (Beispiel 1) hergestellten Kernen aufweisen.

### 4. Messung der thermischen Beständigkeit

Zur Bestimmung der thermischen Beständigkeit der vorstehend beschriebenen Bindemittel wurde das sog. BCIRA Hot Distortion Testverfahren herangezogen (A.D. Morgan, E.W. Fasham: The BCIRA Hot Distortion Tester for Quality Control in Production of Chemically Bonded Sands, Trans. Amer. Foundrym. Soc., 83 (1975) Seite 73). Bei diesem Test werden unter den gleichen Bedingungen wie die Prüfkörper nach DIN 52401 spezielle Biegeriegel hergestellt, mit einer Gasflamme erhitzt und die Deformation des Biegeriegels über die Zeit aufgenommen. Die Dauer bis zum Abbiegen des Testkörpers ist die Heißverformungszeit, d.h. je länger die Zeit bis zum Zusammenbruch des Testkörpers desto größer dessen thermische Beständigkeit. Die Interpretation der BCIRA-Test-Kurven wird z.B. von G.C. Fountaine und K.B. Horton in Gießerei-Praxis 6/1992, Seite 73 beschrieben.

**Tabelle IV**

| BCIRA-Test | | | | | |
|---|---|---|---|---|---|
| Beispiel | 1 | 3 | 4 | 5 | 6 |
| | Vergleich | erfindungsgemäß | | | |
| Heißverformung [sec] | 35,6 | 36,2 | 38,6 | 39,0 | 41,7 |

Tabelle IV zeigt, daß schon geringe Anteile Bisphenol-A-Teer die Heißverformungszeit verlängern und daß der Effekt mit steigenden Anteilen Bisphenol-A-Teer zunimmt.

## Patentansprüche

1. Phenolharz, erhältlich durch Umsetzung eines oder mehrerer unsubstituierter oder substituierter Phenole mit einem oder mehreren Aldehyden, **dadurch gekennzeichnet, daß** zur Umsetzung zusätzlich Bisphenol-A-Teer oder ein in anderer Weise hergestelltes, 10 bis 50 Gew.-% 4,4'-Bisphenol, 3 bis 20 Gew.-% 2,4'-Bisphenol sowie Dimere, Trimere und Polymere des Bisphenols umfassendes Stoffgemisch verwendet wird, und weiterhin **dadurch gekennzeichnet, daß** es durch Umsetzung in Gegenwart eines zweiwertigen Metallsalzes als Katalysator erhältlich ist und ein Resolharz (Benzyletherharz) ist.

2. Phenolharz nach Anspruch 1, **dadurch gekennzeichnet, daß** der Bisphenol-A-Teer in einer Menge von 1 bis 85 Gew.-%, bevorzugt von 8 bis 80 Gew.-% und besonders bevorzugt von 20 bis 75 Gew.-%, bezogen auf die Gesamtmenge von verwendetem Phenol, Aldehyd und Bisphenol-A-Teer, eingesetzt wird.

3. Phenolharz nach Anspruch 1 oder 2, **dadurch gekennzeichnet, daß** als Phenol unsubstituiertes Phenol verwendet wird.

4. Phenolharz nach einem der Ansprüche 1 bis 3, **dadurch gekennzeichnet, daß** als Aldehyd Formaldehyd verwendet wird.

5. Phenolharz nach einem der Ansprüche 1 bis 4, **dadurch gekennzeichnet, daß** zu seiner Herstellung zusätzlich eine Hydroxyverbindung in einem molaren Verhältnis Hydroxyverbindung zu Phenol von 0,04 bis 1,75 zu 1, bevorzugt von 0,1 bis 1,5 zu 1, und besonders bevorzugt von 0,4 bis 1,5 zu 1, eingesetzt wird.

6. Phenolharz nach Anspruch 1, **dadurch gekennzeichnet, daß** das zweiwertige Metallsalz Bleinaphthenat oder Zinkacetat ist.

7. Verwendung des Phenolharzes nach einem der Ansprüche 1 bis 6 als Phenolharzkomponente eines Bindemittels für das Phenolharz-Polyurethanverfahren zur Herstellung von Gießereiformen und -kernen.

8. Bindemittel für das Phenolharz-Polyurethanverfahren zur Herstellung von Gießereiformen und -kernen, umfassend ein Phenolharz gemäß einem der Ansprüche 1 bis 6 als Phenolharzkomponente und ein Polyisocyanat.

9. Bindemittel nach Anspruch 8, wobei das Polyisocyanat 2 bis 5 Isocyanatgruppen pro Molekül aufweist.

10. Bindemittel nach einem der Ansprüche 8 oder 9, wobei das Polyisocyanat in einer Menge von 10 bis 500 Gew.-%, bezogen auf das Gewicht des Phenolharzes, eingesetzt wird.

11. Verfahren zur Herstellung von Gießereiformen und-kernen, umfassend die Schritte:
- Mischen eines Bindemittels nach einem der Ansprüche 8 bis 10 mit einem Formstoff,
- Verarbeiten des Gemisches zu einer Gießereiform oder einem Gießereikern und
- Härten des Bindemittels durch Gashärtung oder Kalthärtung.

## Claims

1. Phenolic resin, obtainable from the reaction of one or more unsubstituted or substituted phenols with one or more aldehydes, **characterized in that** bisphenol A tar or a mixture of substances prepared in a different manner and comprising 10 to 50 wt.-% 4,4'-bisphenol, 3 to 20 wt.-% 2,4'-bisphenol as well as dimers, trimers and polymers of bisphenol, is additionally used in the reaction, and furthermore **characterized in that** it is obtainable from a reaction in the presence of a divalent metal salt as a catalyst and that it is a resol (benzyl ether resin).

2. Phenolic resin according to claim 1, **characterized in that** bisphenol A tar is used in an amount of from 1 to 85 wt.-%, preferably 8 to 80 wt.-% and more preferably 20 to 75 wt.-%, based on the total amount of phenol, aldehyde and bisphenol A tar.

3. Phenolic resin according to claim 1 or 2, **characterized in that** unsubstituted phenol is used as phenol.

4. Phenolic resin according to any of claims 1 to 3, **characterized in that** formaldehyde is used as aldehyde.

5. Phenolic resin according to any of claims 1 to 4, **characterized in that** in addition a hydroxy compound is used in its production, wherein the molar ratio of hydroxy compound to phenol is from 0.04 to 1.75:1, preferably 0.1 to 1.5:1 and more preferably 0.4 to 1.5:1.

6. Phenolic resin according to claim 1, **characterized in that** the divalent metal salt is lead naphthenate or zinc acetate.

7. Use of the phenolic resin according to any of claims 1 to 6 as phenolic resin component of a binding agent for the phenolic resin-polyurethane method for the production of casting molds and cores.

8. Binding agent for the phenolic resin-polyurethane method for the production of casting molds and cores, comprising a phenolic resin according to any of claims 1 to 6 as phenolic resin component and a polyisocyanate.

9. Binding agent according to claim 8, wherein the polyisocyanate comprises two to five isocyanate groups per molecule.

10. Binding agent according to claim 8 or 9, wherein the polyisocyanate is used in an amount of 10 to 500 wt.-%, based on the weight of the phenolic resin.

11. Method for the production of casting molds and cores, comprising the steps of:
- mixing a binding agent according to any of claims 8 to 10 with a molding material,
- forming the mixture into a casting mold or casting core, and
- curing the binding agent by means of gas curing or cold curing.

## Revendications

1. Résine phénolique, pouvant être obtenue par la conversion d'un ou de plusieurs phénols non substitués ou substitués avec un ou plusieurs aldéhydes, **caractérisée en ce que** l'on utilise en outre pour la conversion du goudron-bisphénol A ou un mélange de substances fabriqué d'une autre manière, contenant 10 à 50 % en poids de 4,4'-bisphénol, 3 à 20 % en poids de 2,4'-bisphénol ainsi que des dimères, des trimères ou des polymères du bisphénol, et en outre **en ce qu'**elle peut être obtenue par conversion en présence d'un sel métallique bivalent comme catalyseur et est un résol (résine de benzyl-éther).

2. Résine phénolique suivant la revendication 1, **caractérisée en ce que** le goudron-bisphénol A est utilisé en une quantité de 1 à 85 % en poids, de préférence de 8 à 80 % en poids et de préférence encore de 20 à 75 % en poids, rapportée à la quantité totale utilisée de phénol, aldéhyde et goudron-bisphénol A.

3. Résine phénolique suivant la revendication 1 ou 2, **caractérisée en ce que** l'on utilise comme phénol un phénol non substitué.

4. Résine phénolique suivant l'une quelconque des revendications 1 à 3, **caractérisée en ce que** l'on utilise comme aldéhyde du formaldéhyde.

5. Résine phénolique suivant l'une quelconque des revendications 1 à 4, **caractérisée en ce que**, pour sa fabrication, on emploie en outre un composé hydroxy avec un rapport molaire du composé hydroxy au phénol de 0,04 - 1,75 à 1, de préférence de 0,1 - 1,5 à 1, et de préférence encore de 0,4 - 1,5 à 1.

6. Résine phénolique suivant la revendication 1, **caractérisée en ce que** le sel métallique bivalent est le naphténate de plomb ou l'acétate de zinc.

7. Utilisation de la résine phénolique suivant l'une quelconque des revendications 1 à 6, comme composant de résine phénolique d'un liant pour le procédé polyuréthane-résine phénolique pour la production de moules et de noyaux de fonderie.

8. Liant pour le procédé polyuréthane-résine phénolique pour la production de moules et de noyaux de fonderie, comprenant une résine phénolique suivant l'une quelconque des revendications 1 à 6 comme composant de résine phénolique, ainsi qu'un polyisocyanate.

9. Liant suivant la revendication 8, **caractérisé en ce que** le polyisocyanate présente 2 à 5 groupes isocyanate par molécule.

10. Liant suivant l'une ou l'autre des revendications 8 ou 9, **caractérisé en ce que** le polyisocyanate est utilisé en une quantité de 10 à 500 % en poids. rapportée au poids de la résine phénolique.

11. Procédé pour la production de moules et de noyaux de fonderie, comprenant les étapes suivantes:
- mélange d'un liant suivant l'une quelconque des revendications 8 à 10 avec une matière de moulage;
- préparation du mélange en un moule de fonderie ou un noyau de fonderie; et
- durcissement du liant par durcissement au gaz ou durcissement à froid.
